# EUROPÄISCHE PATENTANMELDUNG

(11) **EP 1 637 771 A2**
(43) Veröffentlichungstag der Anmeldung: **22.03.2006**
(21) Anmeldenummer: 05020073.2
(22) Anmeldetag: 15.09.2005
(51) Int. Cl.: F16H 25/20

(54) **Gewindetrieb**

(30) Priorität: 16.09.2004 DE 202004014795 U
(71) Anmelder: KN Karl Neff Dienstleistungen, 74080 Heilbronn (DE)
(72) Erfinder: Neff, Karl, 74076 Heilbronn (DE)
(74) Vertreter: Patentanwälte Ruff, Wilhelm, Beier, Dauster & Partner

(57) **Zusammenfassung**

Ein Gewindetrieb (11) weist eine Gewindespindel (14) und eine Gewindemutter (17) auf, die relativ zueinander drehbar sind. Die Gewindemutter weist zwei Mutterteile (34, 35) auf, die durch ein Federelement (40) gegeneinander in Drehrichtung verspannt und begrenzt beweglich sind. Dieses Federelement ist eine in Umfangsrichtung an dem Spielausgleichsmutterteil (35) angreifende Blattfeder (40).

## Beschreibung

Die Erfindung betrifft einen Gewindetrieb mit einer Gewindespindel und einer Gewindemutter, die relativ zueinander drehbar sind. Derartige Gewindetriebe, bei denen die Gewindespindel entweder direkt oder über ein Getriebe, meist von einem Elektromotor, gelegentlich aber auch von maschineneigenen Antriebssystemen, angetrieben wird, sind als Linearantriebe bei vielen Maschinen und Geräten im Einsatz. Um die Drehbewegung der Gewindespindel exakt und ohne Totgang in eine Linearbewegung umzusetzen, muss verhindert werden, dass durch ein Gewindespiel zwischen Spindel und Mutter bei Last- oder Drehrichtungswechsel die Genauigkeit der Rotations/Linear-Umsetzung leidet.

Es sind daher Systeme von Selbstnachstell-Einrichtungen zur Erzielung von Spielfreiheit geschaffen worden. Dabei muss berücksichtigt werden, dass selbst bei Verringerung der Toleranzen in der Herstellung von Gewindespindeln und Muttern ein Spiel nicht ganz zu vermeiden ist, weil außer Fertigungseinflüssen auch thermische und andere belastungsbedingte Einflüsse anderenfalls zu einer unzulässigen Schwergängigkeit einerseits und zur Spielerhöhung andererseits beitragen würden.

Es sind daher Systeme bekannt, bei denen die Gewindemuttern geschlitzt und radial federnd an die Spindel angedrückt werden. Ferner sind Systeme bekannt, bei denen die Mutter in axialer Richtung in zwei Mutternteile unterteilt ist und durch axiale Federkraft auseinander gedrückt werden. Dabei ist eines der Mutternteile das Basismutterteil, d.h. an ihm wird die Linearbewegung abgenommen, während das andere Mutternteil nur federnd für einen Spielausgleich sorgt. Diese Vorrichtungen bauen relativ groß und sind schwerer in einen kompakten Linearantrieb zu integrieren. Ferner muss die axiale Spielausgleichskraft größer sein als die maximale Nutzkraft, was zu erhöhtem Energiebedarf und Verschleiß führt.

Es ist ferner aus der GB 2 105 816 A ein Gewindetrieb bekannt, bei dem die Mutterteile in Drehrichtung gegeneinander verspannt und in dieser Richtung auch beweglich zueinander sind. Dazu ist zwischen beiden Mutterteilen eine Torsions-Schraubenfeder vorgesehen.

### Aufgabe und Lösung

Aufgabe der Erfindung ist es, einen Gewindetrieb mit einer Selbstnachstell-Einrichtung zu schaffen, der leichtgängig und trotzdem spielfrei arbeitet und gut in ein Linearantriebssystem zu integrieren ist. Diese Aufgabe wird durch die unabhängigen Ansprüche gelöst.

Dadurch dass das Federelement durch wenigstens eine Blattfeder gebildet wird, werden mehrere Vorteile erreicht. Die Blattfeder lässt sich vorteilhaft zwischen dem beweglichen Spielausgleichs-Mutterteil und einem gehäuseartig diese umschließenden Teil der Linearantriebseinheit unterbringen. Dort wirkt die Blattfeder vorzugsweise verkantungsfrei und mittig bzw. gleichförmig auf die Spielausgleichsmutter, so dass sie frei von unerwünschten Taumelbewegungen ist.

Die Wirkung der Nachstellung bzw. des Spielausgleichs durch gegenseitige Verdrehung ähnlich einer Konterung ist ja, dass die Selbsthemmung der Mutter auf dem Gewinde normalerweise ein Rückdrehen und Lösen der Selbstnachstellung auch bei entsprechenden Kräften in Gegenrichtung verhindert, also die Nachstellung erhalten bleibt. Dadurch können nicht nur Fertigungstoleranzen, sondern auch verschleißbedingtes Spiel dauerhaft ausgeglichen werden.

Um dies jedoch auf ein vernünftiges Maß zu begrenzen, kann nach einem weiteren Merkmal der Erfindung die Drehbeweglichkeit der Mutterteile gegeneinander begrenzt sein, und zwar vorteilhaft auf einen Drehwinkel, der einer Axialbewegung in der Größenordnung eines Bruchteils einer Gewindesteigung entspricht. Dabei kann das Federelement selbst als Begrenzungsanschlag wirken. Wenn man beispielsweise die Blattfeder in Nuten einlegt, die sowohl in der Spielausgleichsmutter als auch in dem sie aufnehmenden Gehäuse ausgebildet sind, so wirkt die Blattfeder, ggf. nach Ausschöpfung ihres Federweges, jedoch bestimmt von der Nutenbreite und -anordnung, als starrer Anschlag in Drehrichtung. Auf diese Weise kann verhindert werden, dass die Gewindemutter durch die Nachstellung bei einer Spindelabnutzung sich auf einen von der Mutter normalerweise bestrichenen Bereich der Spindel einstellt und dann, wenn dieser Bereich verlassen wird, klemmt.

In diesem Zusammenhang ist es auch vorteilhaft, wenn wenigstens eines der Mutterteile aus einem flexibleren und/oder leichter verschleißenden Matrial besteht als die Gewindespindel. Auch aus diesem Grunde ist es bevorzugt, die Mutterteile aus Kunststoff herzustellen, wobei ein reibungsarmer Kunststoff bevorzugt ist. Eine solche Ausbildung wirkt der vorher beschriebenen Neigung entgegen, weil die ohnehin leichter austauschbare Mutter einem unvermeidlichen Verschleiß unterliegt, jedoch die Spindel über ihre gesamte Länge verschleißfrei bleibt.

Dabei hilft es auch, wenn die Gewindespindel, selbst wenn sie vorteilhaft aus Aluminium besteht, mit einer dauerhaften Gleitbeschichtung versehen ist, wie sie unter dem Markennamen "DICRONITE" von der Firma U.T.E. POHL GmbH in Iserlohn entwickelt wurde. Diese Beschichtung wird durch Implantation von Molekülen in die Oberfläche durchgeführt.

Die Blattfeder kann aus einem schmalen Streifen aus Federmaterial z.B. aus Federstahl bestehen, der in Längsrichtung von beiden Stirnseiten her bis zu einem Mittelabschnitt heran geschlitzt ist. Dabei kann die eine Hälfte blattfederartig gebogen sein und die andere Hälfte weitgehend gerade bleiben. Diese Hälfte wird dann in einer relativ engen Nut, z.B. an dem Linearantriebsgehäuse, geführt, während der gebogene Teil in einer breiteren Nut am Spielausgleichs-Mutterteil geführt ist und den dadurch entstehenden begrenzten Federweg ausnutzen kann. Es ist aber auch möglich, beide Blattfederteile mit vergleichbarer Krümmung auszuführen, so dass z.B. eine Federgestaltung in Form eines X entsteht. Es sind auch andere Arten von Blattfederausbildungen möglich, wobei jedoch bevorzugt ist, dass die Blattfederrichtung in Spindelrichtung verläuft, weil dadurch eine raumsparende Arbeitsweise möglich ist. Außerdem ist es vorteilhaft, dass durch eine symmetrische Ausbildung und eine Anlage der Federenden nahe den Enden der Mutte jede Verkantungsneigung vermieden wird.

Die Linearantriebseinheit kann ein ebenfalls aus Kunststoff hergestellter Block sein, in den das Basismutterteil fest eingesetzt oder sogar das zugehörige Gewinde selbst eingeformt ist. Bei einer eingesetzten Version kann dies vorteilhaft durch ein Keilwellen/-nabenprofil geschehen, wodurch auch ein einfaches Austauschen der das Bewegungsgewinde tragenden Hülse möglich ist.

Das Spielausgleichs-Mutterteil kann ebenfalls in diesen Block geführt werden und dort kann eine Keilnabenprofilierung zur Aufnahme der Blattfedern dienen. Dabei führen allerdings die Scheitel oder Stege der Keilnabenprofilierung das bewegliche Mutterteil frei drehbar. Dieses hat dann Nuten, in die die Blattfeder wirksam eingreift.

Nach einem weiteren Merkmal der Erfindung kann die Linearantriebseinheit so ausgebildet sein, dass sie als Adapter für die unterschiedlichsten Anschlussmöglichkeiten dient, indem sie Durchgangslöcher für einen normalen Schraubanschluss, Schienen zur flexiblen Anbringung von Spannelementen, zentrale Sacklöcher zur Aufnahme von Schwenkbolzen, mit denen ein kardanischer Anchluss möglich ist, mittlere Zentrieraufnahmen und/oder Aufnahmen zum Einsetzen von Gleitsteinen, z.B. aus reibungsarmem Kunststoff, aufweist, mit der die Linearantriebseinheit verdrehsicher an einer Führungsbahn oder ―schiene geführt werden kann.

Besonders bevorzugt ist die Ausbildung der Gewindespindel als Rohr. Dies ermöglicht die einfache Anbringung eines Lagerzapfens über eine Klemm- bzw. Spannverbindung, beispielsweise mittels einer Kreiskeilverbindung, wie sie unter dem Markennamen "3K" bzw. "Qwiss" von der Firma H.u.J.KÜHL GmbH in Schlierbach vertrieben wird.

Es ist auch vorteilhaft, wenn die Gewindespindel ein Bewegungs-Rechteck-Gewinde aufweist, bei dem die Gewindescheitel, also die Breite zwischen den Gewindegängen größer ist als die Breite der Gänge oder Nuten. Mit anderen Worten: Die sich zu einem Zylinder zusammenfügenden Gewindescheitel sollten breiter sein als die Hälfte, vorzugsweise 2/3 der Gewindesteigung bzw. -teilung. Dadurch ist es möglich, die Gewindespindel unmittelbar in einem Gleitlager zu lagern, was wiederum den Vorteil schafft, dass eine Gewindespindel in einer Standardgröße hergestellt und entsprechend den Erfordernissen einfach abgelängt werden kann.

Es ist vorher beschrieben worden, dass infolge der Selbsthemmung ein selbsttätiges Lösen der Selbstnachstelleinrichtung normalerweise nicht zu befürchten ist. Wenn diese jedoch nicht ausreicht, könnte zusätzlich ein Sperrelement eingeschaltet werden, das die Drehbewegung in Löserichtung sperrt, so dass die Selbstnachstelleinrichtung immer nur in einer die Spielfreiheit aufrechterhaltenden Richtung gedreht werden kann.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischenüberschriften beschränkt die unter diesen gemachten Aussagen nicht in ihrer Allgemeingültigkeit.

### Kurzbeschreibung der Zeichnungen

Ein Ausführungsbeispiel der Erfindung ist in der Zeichnung dargestellt und wird im Folgenden näher erläutert. Es zeigen.
- Fig. 1: eine perspektivische Ansicht eines Gewindetriebes nach der Erfindung,
- Fig. 2: den Gewindetrieb mit aufgeschnittener Gewindemutter und Lagern,
- Fig. 3: eine Seitenansicht eines Teils der Gewindespindel,

- Fig. 4: eine perspektivische Explosionsdarstellung der Linearantriebseinheit,
- Fig. 4a: eine vergrößerte Darstellung eines Federelementes,
- Fig. 5: eine perspektivische Ansicht der zusammengefügten Einheit, jedoch ohne Gewindemuttern,
- Fig. 6: eine teilgeschnittene Stirnansicht der Linearantriebseinheit mit einem vergrößerten Detail und
- Fig. 7: eine Ansicht der Befestigung zwischen Gewindespindel und Lagerzapfen.

### Detaillierte Beschreibung eines Ausführungsbeispiels

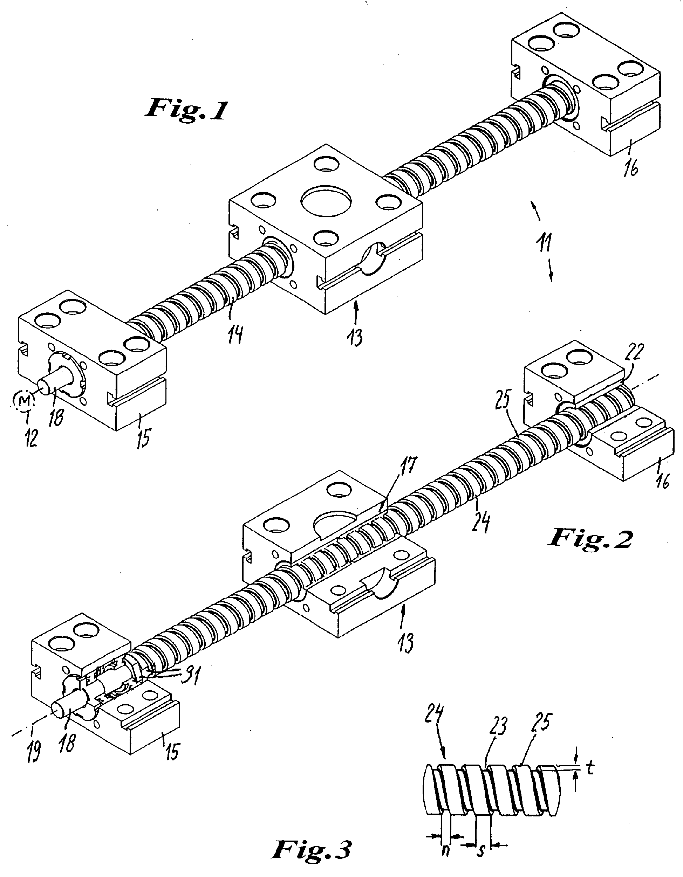

Die Figuren 1 und 2 zeigen einen Gewindetrieb 11, der als Linearantrieb dient und von einem nicht im Detail dargestellten Motor 12 angetrieben wird. Dies kann beispielsweise ein Schrittmotor sein, der von einer Datenverarbeitungsanlage gesteuert wird und damit eine exakte Positionierung einer Linearantriebseinheit 13 ermöglicht.

Der Gewindetrieb weist eine Gewindespindel 14 auf, die in zwei Lagern 15, 16 an beiden Enden gelagert ist und auf der die Linearantriebseinheit 13, die eine zweiteilige Gewindemutter 17 enthält, angeordnet ist.

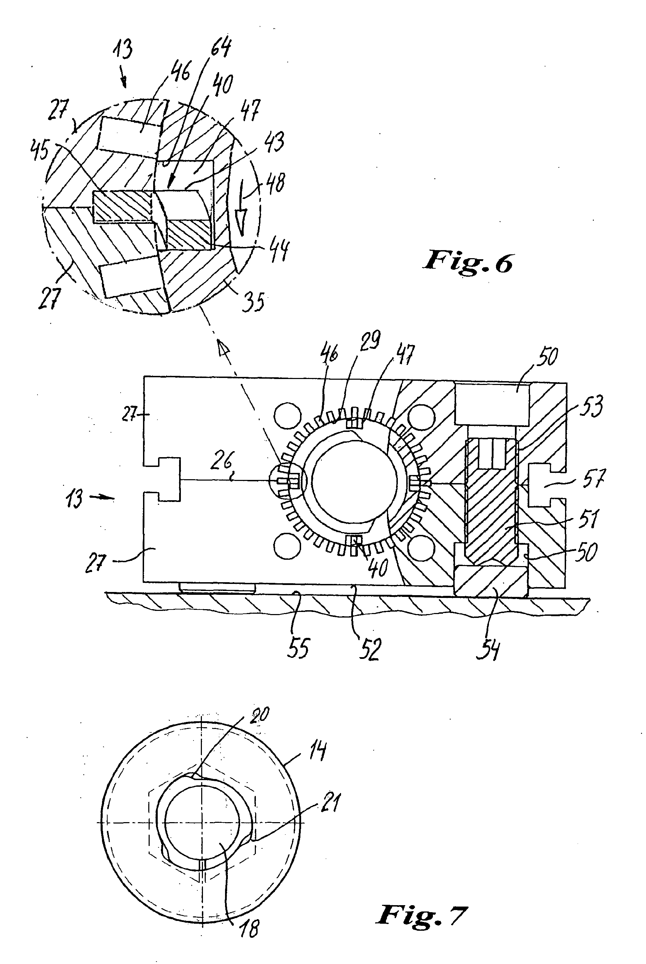

Wie aus Fig. 2 zu erkennen ist, ist die Gewindespindel 14 in den antriebsseitigen Lagern 15 mittels eines Lagerzapfens 18 aufgenommen, der mit der Gewindespindel verbunden ist und diese in Längsrichtung (Spindelachse 19) verlängert. Bei den Lagern handelt es sich um dauergeschmierte Gleitlager. Die Verbindung zwischen dem Lagezapfen 18 und der aus einem Aluminiumrohr hergestellten Gewindespindel geschieht durch eine Kreiskeilverbindung, deren Prinzip in Fig. 7 dargestellt ist. Diese Verbindung, die auch unter dem Markennamen "3K" bzw. "Qwiss" bekannt ist, enthält eine nockenartige, in der Abwicklung etwa keilförmige Profilierung 20 am Umfang des Lagerzapfens und eine entsprechende, z.B. durch Fräsen hergestellte Profilierung 21 im Inneren der Gewindespindel 14. Beide Profilierungen sind so bemessen, dass sie ineinandergesteckt werden können. Durch eine Verdrehung beider Teile gegeneinander wird eine erhebliche Spannkraft erzeugt, die sich auch infolge der Selbsthemmung dauerhaft hält. Diese Verbindung ist selbstzentrierend und auch wieder lösbar. Das Spannen erfolgt über die in Fig. 3 erkennbaren Schlüsselflächen 31.

Am Lagerzapfen 18 greift der Antriebsmotor 12 an. Das antriebsferne Lager 16 ist, wie man aus Fig. 2 sieht, mit einer relativ langen Gleitlagerbuchse 22 ausgerüstet, in der die Gewindespindel mit ihrem Gewinde, d.h. einschließlich der Gewindenuten 23, gelagert ist. Dazu ist es vorteilhaft, dass, wie aus Fig. 3 zu erkennen ist, das Spindelgewinde 24 ein flaches Rechteckgewinde ist, dessen Profil sehr breite und auf einer gemeinsamen Zylinderfläche liegende Gewindescheitelflächen 25 aufweist, deren Breite s im Vergleich zur Gewindenutenbreite n und auch zur Flankenhöhe bzw. Gewindetiefe t groß ist. Die Verhältnisse sollten etwa wie folgt sein: s / n von 1 bis 4, vorzugsweise 2, und s / t von 8 bis 2, vorzugsweise ca. 4. Es handelt sich um ein eingängiges Flachgewinde mit rechteckigem Gewindeprofil. Dieses Gewinde hat hervorragende Führungseigenschaften für die Linearantriebseinheit 13 und hat darüber hinaus den Vorteil, dass die Gewindespindel 14 auf einen für den Einbau passenden Lagerabstand durch einfaches Ablängen angepasst werden kann, weil die tragende Gewindescheitelfläche 25 unmittelbar zur Lagerung im Lager 16 verwendbar ist. Auch auf der Antriebsseite braucht die Spindel nur abgelängt und mit der Schlüsselfläche 31 versehen zuwerden.

Ferner ist die Gewindespindel mit einer bereits vorstehend näher beschriebenen dauerhaften Gleitbeschichtung versehen, die die Reibung sowohl im Lager als auch in der Gewindemutter 17 verringert.

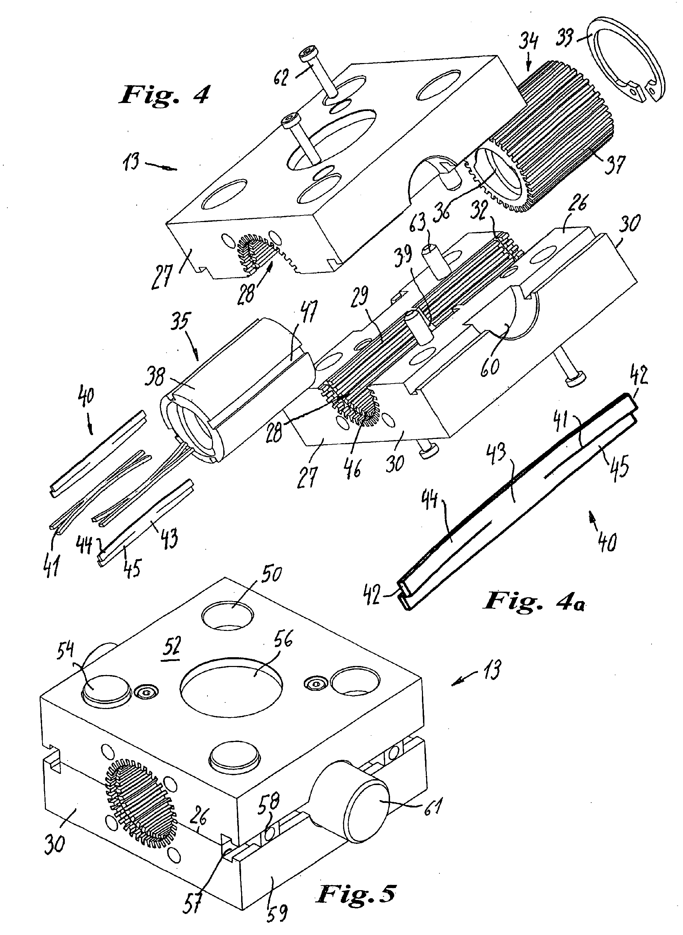

Fig. 4 und 5 zeigen detailliert die Linearantriebseinheit 13. Sie besteht aus einem Kunststoffblock, der aus zwei Hälften 27 zusammengesetzt ist. Die Teilungsebene 26 verläuft in Richtung der Spindelachse 19 mittig. In die beiden Hälften 27, die miteinander identisch sein können, sind anschließend an die Teilungsebene 26 jeweils Hälften einer Mutternaufnahme 28 eingeformt, die ein längs ausgerichtetes Keilnabenprofil 29 enthält. Dieses ist mittig duch einen umlaufenden Steg 39 unterteilt und hat nahe den beiden Stirnflächen 30 je eine umlaufende Nut 32 zur Aufnahme eines Sprengringes 33.

Die Gewindemutter 17 besteht aus zwei Mutterteilen, nämlich dem Basismutterteil 34 und dem Spielausgleichs-Mutterteil 35. Bei beiden handelt es sich um relativ lange Hülsen aus einem gut gleitfähigen Kunststoff, deren Durchmesser geringer ist als die axiale Länge. Auf der Innenseite ist das zum Spindelgewinde 24 passende Bewegungs-Innengewinde 36 eingeformt. Außen trägt das Basismutterteil 34 eine Keilwellenverzahnung 37, die zu dem Keilnabenprofil 29 paßt. Wenn die Hälften 27 zusammengesetzt sind, ist daher das Basismutterteil 34 darin fest verankert, und zwar in Drehrichtung durch die Keilverzahnung und in axialer Richtung durch den Steg 39 und den in die Nut 32 einzusetzenden Sprengring 33.

Das Spielausgleichs-Mutterteil 35 wird ebenfalls durch den Steg und ggf. einen Sprengring axial gesichert gehalten, ist jedoch drehbar. Dazu läuft die zylindrische Außenfläche 38 des hülsenförmigen Spielausgleichs-Mutterteils 35 auf den Stegen des Keilnabenprofils 29, also auf dem Innenumfang der Aufnahme 28. Die freie Drehung wird jedoch durch Federelemente 40 begrenzt, die im dargestellten Beispiel als vier Blattfedern ausgebildet sind. Die Blattfedern sind langgestreckte Streifen aus Federmaterial, z.B. Federstahl, die in Längsrichtung etwa mittig einen Schlitz 45 aufweisen, der von den Stirnflächen 42 bis zu einem ungeschlitzten Mittelabschnitt 43 reicht, an dem die beiden dadurch abgetrennten streifenförmigen Abschnitte 44 und 45 zusammenhängen (s. vergrößerte Darstellung in Fig. 4a). Die somit teilweise voneinander getrennten Abschnitte 44, 45 der Blattfeder sind im dargestellten Beispiel unterschiedlich gekrümmt. Der Federabschnitt 44 ist blattfederartig so gekrümmt, dass er von dem weitgehend geraden Halteabschnitt 45 an seinen Enden einen erheblichen Abstand hat.

Die Federelemente 40 werden mit ihrem im wesentlichen geraden Halteabschnitt 45 in die entsprechend angepassten Nuten 46 des Keilnabenprofils eingesetzt, und zwar an vier um den Umfang herum in gleichen Abständen angeordenten Stellen und anfänglich ohne Vorspannung. Die Federelemente (40) sind etwa so lang wie das Spielausgleichs-Mutterteil 35. Dieses hat an seiner Außenfläche 38 Nuten 47, die wesentlich breiter sind als die Nuten 46. Dies ist im einzelnen auch aus der Fig. 6, insbesondere dem vergrößerten Detail, zu erkennen. Es ist dort das Federelement 40 gezeigt, das sich in der Trennebene 26 befindet. Durch diese Anordnung kann das Einsetzen der Federelemente und des Mutterteils 35 von der Mittelebene vor dem Zusammenfügen der Teile 27 erfolgen. Anderenfalls wäre aber auch ein Einschieben in Längsrichtung vor Einsetzen des Sprengringes möglich.

Es ist zu erkennen, dass das aus relativ dickem Material bestehende Blattfederelement (40) in der Nut 46 nur wenig Spielraum hat. Bei einer dünneren Blattfeder könnte aber auch der Halteabschnitt 45 etwas gebogen sein, um sich in der Nut "festzukrallen". Ferner sieht man, dass der gebogene Federabschnitt 44 in der breiteren Nut 47 liegt, die eine Breite hat, die gleich oder größer der Blattfedermaterialdicke zuzüglich dem Federweg, also der Ausbiegung der Blattfeder, ist.

Aus Fig. 6 ist zu erkennen, dass bei einer Drehung des Mutterteils 35 entgegen dem Uhrzeigersinn (Pfeil 48) der Federabschnitt 44 flachgedrückt wird, dann aber die Blattfeder mit ihrem Mittelabschnitt 43 einen kaum zu überwindenden Anschlag bildet, der eine weitere Drehung in Richtung 48 verhindert. Dadurch wird die Selbstnachstellung auf einen konstanten und durch die Anordnung festgelegten Wert begrenzt. In Fig. 6 ist bereits ein Teil des Federweges verbraucht.

Die Linearantriebseinheit 14 wird nach Einlegen der Blattfedern und Einsetzen der beiden Mutterteile 34, 35 sowie des Sprengringes 33 geschlossen. Es ist zu erkennen, dass der so gebildete Block der Linearantriebseinheit 13 mehrere Anschlussmöglichkeiten hat. Es sind vier durch den ganzen Block hindurchgehende Durchgangslöcher 50 vorgesehen, die einerseits zur Befestigung durch von beiden Seiten einsetzbare Schrauben oder durchgehende Bolzen dienen können, jedoch auch zur Verdrehsicherungsführung der Linearantriebseinheit 30 dienende Gleitsteine 13 (s. auch Fig. 6) aufnehmen können. Es handelt sich dabei um relativ dicke Scheiben aus gleitfähigem Kunststoff, die in die Durchgangslöcher 50 eingesetzt sind und über Einstell-Madenschrauben 51 in ihren Überstand über die Seitenfläche 52 einstellbar sind. Sie sind in Gewinde 53 eingeschraubt, die sich in den Durchgangslöchern 50 in deren innerem, verengten Teil, befinden. Fig. 6 zeigt, dass diese Gleitsteine 54 auf einer Führungsfläche 55 laufen, beispielsweise einer Führungsbahn oder ―schiene.

Ferner verfügt die Linearantriebseinheit über eine mittlere Zentriereinsenkung 56 in der Seitenfläche 52. In einer Längs-Schmalseite 59 sind, jeweils zu beiden Seiten der Trennebene 26, T-Nuten 57 eingeformt, die zur Aufnahme von entsprechenden T-Spannstücken 58 dienen können (Fig. 5).

Ferner sind in diesen Längsseiten 59 Ausnehmungen 60 eingeformt, in die Gelenkbolzen 61 einsetzbar sind, die als Lagerbolzen für einen kardanischen Anschluss der Linearantriebseinheit dienen können. Es ist auch möglich, in den Stirnseiten 30 Schraublöcher zum Anflanschen von Anschlussteilen unterzubringen.

Es ist zu erkennen, dass die Linearantriebseinheit 13 eine Vielzahl von Anschlussmöglichkeiten bietet, die den Gewindetrieb zu einem universell einsetzbaren Gerät macht.

Nach dem Zusammenfügen der beiden Hälften 27 der Liniearantriebseinheit mittels der Schrauben 62 und der Passstifte 63 sowie dem Aufschrauben der Gewindemutter auf die Gewindespindel wird diese in den Lagern festgelegt und ist nach Anschluss des Motors 12 einsatzfähig. Die Blattfedern sind so angebracht, dass sie bei eingeschraubter Spindel mit den Enden ihrer Federabschnitte auf eine Seitenfläche der Nut 47 drücken und damit den Spielausgleichs-Mutternteil 35 soweit relativ zu den in der Linearantriebseinheit festgelegten Basismutterteil 34 verdrehen, dass kein Spiel zwischen Gewindespindel 14 und Linearantriebseinheit 14 mehr vorhanden ist. Dabei liegt jeweils eine Gewindeflanke der Spindel an der entsprechenden Flanke des Basismutterteils an und die andere Gewindeflanke an der zugehörigen, entgegengesetzt gerichteten Flanke des Spielausgleichs-Mutterteils 35. Dabei berühren sich die beiden Mutterteile selbst nicht, werden aber jeweils in eine axiale Richtung gedrück, die sich auch bei der Drehrichtungsumkehr nicht ändert. Daher brauchen die Mutterteile 34, 35 nicht beidseitig passgenau eingesetzt sein. Die Stärke der Drehtendenz bzw. der Spannung in Umfangsrichtung hängt von verschiedenen Faktoren ab, unter anderem den Reibwerten von Spindel und Mutter, der Steigung etc.. Dies kann gemäß der Erfindung durch Hinzufügen oder Wegnehmen einer Blattfeder leicht beeinflusst werden, ebenso wie deren genaue Lage, wobei sich das Keilnabenprofil 29 mit vielen schmalen Nuten 46 als günstig erweist.

Die einmal eingenommene Drehposition des Spielausgleichs-Mutterteils 35 wird beibehalten, weil selbst bei einer Belastung in einer Richtung, die sonst zur Lösung der Konterung führen könnte, die Selbsthemmung dies verhindert. Wenn jedoch durch Abnutzung der Mutter die Nachstellmöglichkeit aufgebraucht ist, dann ist der Federweg der Blattfedern 40 am Ende und die Blattnutflanke 64 der Nut 47 (Fig. 6) schlägt an dem ungeschlitzten Mittelabschnitt 43 der Blattfeder an, die damit eine weitere Drehung sperrt. Das zeigt an, dass die Muter verschlissen ist und ausgetauscht werden sollte.

Wegen weiterer Einzelheiten der bevorzugten Gestaltung, insbesondere auch der Abmessungsverhältnisse, wird auf die Zeichnungen ausdrücklich Bezug genommen.

## Patentansprüche

1. Gewindetrieb mit einer Gewindespindel (14) und einer Gewindemutter (17), die relativ zueinander drehbar sind, mit einer Selbstnachstell-Einrichtung zur Erzielung von Spielfreiheit, wobei die Gewindemutter zwei mit Gewinde (36) versehene, durch ein Federelement (40) gegeneinander in Drehrichtung verspannte und begrenzt bewegliche Mutterteile (34, 35) aufweist, wobei die Gewindemutter (17) ein mit einem Abtrieb, z.B. einer LinearAntriebseinheit (13), verbindbares Basismutterteil (34) und ein demgegenüber begrenzt bewegliches Spielausgleichs-Mutterteil (35) aufweist, **dadurch gekennzeichnet, dass** als Federelement (40) wenigstens eine in Umfangsrichtung an dem Spielausgleichs-Mutterteil (35) angreifende Blattfeder vorgesehen ist.

2. Gewindetrieb nach dem Oberbegriff des Anspruchs 1, **dadurch gekennzeichnet, dass** die Drehbeweglichkeit der Mutterteile (34, 35) gegeneinander begrenzt ist.

3. Gewindetrieb nach Anspruch 1 oder 2, **dadurch gekennzeichnet, dass** mehrere Blattfedern (40) gleichmäßig über den Umfang des Spielausgleichs-Mutterteils (35) verteilt an diesem angreifen.

4. Gewindetrieb nach wenigstens einem der vorhergehenden Ansprüche, **dadurch gekennzeichnet, dass** die Gewindemutter (17) in der Linear-Antreibseinheit (13) enthalten ist, die das Basis-Mutterteil (34) aufweist oder fest aufnimmt und das Spielsausgleichs-Mutterteil (35) drehbeweglich enthält.

5. Gewindetrieb nach wenigstens einem der vorhergehenden Ansprüche, **dadurch gekennzeichnet, dass** das Spielausgleichs-Mutterteil (35) durch zwischen seinem Außenumfang und dem Innenumfang der Linearantriebseinheit wirkende, vorzugsweise an Nuten (46, 47) im Außen- und/oder -Innenumfang angreifenden und insbesondere in diesen angeordnete Blattfedern (40) in Drehrichtung vorgespannt ist.

6. Gewindetrieb nach wenigstens einem der vorhergehenden Ansprüche, **dadurch gekennzeichnet, dass** die Blattfedern (40) in Längsrichtung des Gewindetriebs (11) verlaufen und in dieser Richtung teilweise zweigeteilt sind, insbesondere in Längsrichtung verlaufende, jeweils von einer Stirnseite bis zu einem ungeteilten Mittelabschnitt (43) reichende Trennschlitze (41) aufweisen, wobei vorzugsweise die Trennschlitze (41) einen nicht oder wenig gekrümmten Halteabschnitt (45) von einem stärker gebogenen Federabschnitt (44) trennen.

7. Gewindetrieb nach wenigstens einem der vorhergehenden Ansprüche, **dadurch gekennzeichnet, dass** die Blattfeder (40) in eine Nut (46), vorzugsweise am Innenumfang der Linearantriebseinheit (13), eingelegt ist, die nur wenig breiter ist als die Blattfederdicke und mit einem gebogenen Federabschnitt (44) in einer vorzugsweise am Außenumfang des Spielausgleichs-Mutterteils (35) angeordneten, breiteren Nut (47) liegt.

8. Gewindetrieb nach wenigstens einem der vorhergehenden Ansprüche, **dadurch gekennzeichnet, dass** das Basis-Mutterteil (34) durch ein Keilwellen/-nabenprofil (29, 37) mit der Linearantriebseinheit (13) verbunden ist und/oder die Linearantriebseinheit (13) in ihrem das Spielausgleichs-Mutterteil (35) aufnehmenden Abschnitt ebenfalls eine Keilnabenprofilierung (29) aufweist, auf deren Scheiteln das Spielaufnahme-Mutterteil (35) drehbar gelagert ist.

9. Gewindetrieb nach dem Oberbegriff des Anspruchs 1, **dadurch gekennzeichnet, dass** die die Gewindemutter (17) aufnehmende Linearantriebseinheit (13) wenigstens zwei der folgenden Anschlusselemente aufweist:
- Durchgangslöcher (50), vorzugsweise vier, zur Aufnahme von Schrauben,
- Schienen bzw. Nuten (57) zum verschiebbaren Anbringen von Spannelementen, z.B. T-Nuten,
- zentrale Sacklöcher (60) zur Aufnahme von Gelenkbolzen (61),
- wenigstens eine mittlere Zentrieraufnahme (56),
- Aufnahmen zum Einsetzen ggf. über eine Schraube einstellbarer Gleitsteine (54) zur Führung der Linearantriebseinheit (13) auf einer Führungsfläche (55) oder-schiene.

10. Gewindetrieb nach wenigstens einem der vorhergehenden Ansprüche, **dadurch gekennzeichnet, dass** die die Gewindemutter (17) aufweisende Linearantriebseinheit (13) ein aus zwei Hälften (27) zusammengesetzter Block ist.

11. Gewindetrieb nach wenigstens einem der vorhergehenden Ansprüche, **dadurch gekennzeichnet, dass** die Gewindespindel 14) ein Bewegungs-Rechteckgewinde mit einem Gewindeprofil aufweist, dessen Scheitel (25) breiter ist als der Gewindezwischenraum (23) und dessen Scheitelflächen (25) sich zu einer Zylinderfläche ergänzen.

12. Gewindetrieb nach wenigstens einem der vorhergehenden Ansprüche, **dadurch gekennzeichnet, dass** die Gewindespindel (14) und/oder die Gewindemutter (17) mit einer dauerhaften Gleitbeschichtung versehen ist.

13. Gewindetrieb nach wenigstens einem der vorhergehenden Ansprüche, **dadurch gekennzeichnet, dass** die Gewindespindel (14) als Rohr, vorzugsweise aus Aluminium, ausgebildet und, insbesondere an ihrem Antriebsende, mit einem Lagerzapfen (18) verbunden ist, der über eine Klemm- bzw. Spannverbindung (20, 21) im Rohrinneren verankert ist, vorzugsweise mittels einer KreiskeilVerbindung.

14. Gewindetrieb nach wenigstens einem der vorhergehenden Ansprüche, **dadurch gekennzeichnet, dass** die Gewindespindel (14) an wenigstens einer Seite, vorzugsweise an der der Antriebsseite gegenüberliegenden Seite, auf ihren Gewindeteil in einem Gleitlager (16) gelagert ist, wobei die Gewindescheitel die spindelseitige Lagerfläche bilden.

15. Gewindetrieb nach wenigstens einem der vorhergehenden Ansprüche, **dadurch gekennzeichnet, dass** zwischen die Mutterteile (34, 35) ein die Drehbewegung in einer Richtung, insbesondere in Löserichtung der gegenseitigen Verspannung, sperrendes Element, z.B. ein Freilauf, eingeschaltet ist.

16. Gewindetrieb nach wenigstens einem der vorhergehenden Ansprüche, **dadurch gekennzeichnet, dass** wenigstens eines der Mutterteile (34, 35) aus einem flexibleren und/oder leichter verschleißenden Material besteht als die Gewindespindel (14), wobei insbesondere wenigstens eines, vorzugsweise beide Mutterteile (34, 35) aus rebungsarmem Kunststoff bestehen.

17. Gewindetrieb nach wenigstens einem der Ansprüche 2 bis 16, **dadurch gekennzeichnet, dass** die Drehbeweglichkeit der Mutterteile (34, 35) auf einen Drehwinkel begrenzt ist, der einer Axialbewegung eines Bruchteils einer Gewindesteigung entspricht.

18. Gewindetrieb nach wenigstens einem der Ansprüche 2 bis 17, **dadurch gekennzeichnet, dass** das Federelement (40) als Begrenzungsanschlag ausgebildet ist.
